# EUROPÄISCHE PATENTANMELDUNG

(11) **EP 2 995 450 A1**
(43) Veröffentlichungstag der Anmeldung: **16.03.2016**
(21) Anmeldenummer: 14184489.4
(22) Anmeldetag: 11.09.2014
(51) Int. Cl.: B32B 17/10, E06B 3/67, E06B 5/16

(54) **Brandschutzverglasung**

(71) Anmelder: Saint-Gobain Glass France, 92400 Courbevoie (FR)
(72) Erfinder: Gelderie, Udo, 52146 Würselen (DE); Wildenhain, Klaus, 41516 Grevenbroich (DE)
(74) Vertreter: Frei Patent Attorneys

(57) **Zusammenfassung**

Ein transparentes Brandschutzelement für den Hoch-, Fahrzeug- und/oder Schiffsbau weist mindesten zwei im Wesentlichen parallele transparente Flächenelemente mit je einer ersten Flachseite und einer zweiten Flachseite, welche im Wesentlichen parallel zueinander verlaufen, auf. Die Flächenelemente können transparent sein. Ein erstes und ein zweites Flächenelemente vom einem Paar aus direkt benachbarten Flächenelementen sind von einander beabstandet und bilden so einen Zwischenraum. Mindestens das erste Flächenelement von einem Paar aus direkt benachbarten Flächenelementen weist auf einer dem Zwischenraum abgewandten Flachseite eine infrarotreflektierende Beschichtung auf. Mindestens das erste oder das zweite Flächenelement weist mindestens eine vorgespannte Glasscheibe und/oder ein Keramikglas auf. Das Brandschutzelement weist unter Brandbedingungen gemäss EN 1363 und EN 1364 (Stand Dezember 2013) eine Feuerwiderstandsdauer von mindestens 15 Minuten auf. Die Feuerwiderstandsdauer bzw. die Feuerwiderstandsprüfung von Bauteilen ist beispielsweise in EN 1363 bzw. EN 1364 (Stand Dezember 2013) geregelt.

## Beschreibung

Die Erfindung bezieht sich auf das Gebiet des Brandschutzes. Sie bezieht sich auf ein Brandschutzelement für den Hoch-, Fahrzeug- und/oder Schiffsbau, insbesondere den Zugbau, mit mindestens zwei voneinander beabstandeten Flächenelementen.

Geprüfte Brandschutzelemente müssen, um als solche anerkannt zu werden, bei standardisierten Feuerwiderstandstests bestimmte Normen und Anforderungen erfüllen. Solche Normen werden beispielsweise durch die Europäische Norm EN 1363 (Stand Dezember 2013) und EN 1364 (Stand Dezember 2013) aufgestellt. Die EN 1363 stellt allgemeine Grundsätze für die Bestimmung der Feuerwiderstandsdauer von verschiedenartigen Bauteilen auf, die unter genormten Bedingungen dem Feuer ausgesetzt werden. Gemäss EN 1363 liegt die Temperatur im Brandraum, also auf der feuerzugewandten Seite des Brandschutzelements, bereits nach 15 Minuten bei 700°C. EN 1364 legt Verfahren zur Bestimmung der Feuerwiderstandsdauer von nichttragenden Bauteilen fest. Die Norm DIN 4102 befasst sich mit dem Brandverhalten von Baustoffen.

Der Feuerwiderstand bzw. Brandwiderstand kann als Fähigkeit eines Bauteils betrachtet werden, eine wirksame Barriere gegen die Ausbreitung von Flammen, Rauch und heissen Gassen zu bilden und/oder die Transmission von Hitzestrahlung zu verhindern. Eine Feuerwiderstandsdauer ist als Mindestdauer in Minuten definiert, während der das Brandschutzelement bei der Prüfung nach genormten Prüfungsverfahren mit definierten Randbedingungen (EN 1364 und EN 1363) und unter einer bestimmten Temperaturbeanspruchung bestimmte eventuell genormte Anforderungen erfüllt. Beispielsweise sind solche genormten Anforderungen in EN 13505 aufgeführt bzw. definiert und ermöglichen die Klassifizierung von Brandschutzelementen. Die Feuerwiderstandsdauer ist somit ein Mass für die Brauchbarkeit der Konstruktion im Brandfall. Mit anderen Worten: Während der Feuerwiderstandsdauer wird der Durchgang von Feuer durch das Brandschutzelement verhindert, also eine Raumabschluss unter Brandbedingungen (EN 1363 und EN 1364) sicherstellt. Zusätzlich zum Raumabschluss kann das Brandschutzelement noch weitere Funktionen, wie beispielsweise eine Hitzeisolierung erfüllen.

Die Zeitdauer innerhalb der das gemäss den oben genannten Normen geprüfte Brandschutzelemente entsprechende Kriterien bzw. Anforderungen erfüllt, erlaubt die Klassifizierung des Brandschutzelementes. Die Brandschutzelemente können wie folgt gemäss der Norm EN 13501 (Stand Dezember 2013) klassifiziert werden. Es werden beispielsweise die folgenden Klassen unterschieden:
Klassifikation E (Raumabschluss) klassifiziert raumabschliessende Konstruktionselemente, danach, wie lange sie eine Dichtigkeit gegenüber Rauch und Heissgasen gewährleisten.

Klassifikation I (Isolation) spezifiziert die Hitzedämmungseigenschaften unter Brandeinwirkung (s.u. die Erklärungen zu EI).

Klassifikation EW (Wärmestrahlung) bezieht sich auf raumabschliessende Konstruktionselemente mit reduzierter Hitzestrahlung (<15kW/m²). Solche Konstruktionselemente können im Brandfall beispielsweise transparent bleiben oder eine opake Schutzschicht bilden.

Klassifikation EI (Raumabschluss & Isolation) spezifiziert raumabschliessende Konstruktionselemente danach, wie lange sie die Anforderungen an die Klasse E erfüllen und zusätzlich eine Isolation gegen Hitzeeinwirkung (Strahlung, Wärmeleitung) bilden, indem während der Feuerwiderstandsdauer der mittlere Temperaturanstieg auf der Kaltseite 140 K und der maximale Temperaturanstieg auf der Kaltseite <180 K nicht überschritten werden darf. Die EI-Klassifikation ist somit nur anwendbar, wenn die Aussenseite des Brandschutzkonstruktionselementes auf der feuerabgewandten Seite (Kaltseite) über eine gewisse Zeit (Feuerwiderstandsdauer) unterhalb von 200°C bleibt, d.h. sich die Kaltseite maximal um 180 K erwärmt. Beispielsweise hält ein Brandschutzkonstruktionselement der Klasse EI 30 30 Minuten einem Brand stand, ein Brandschutzkonstruktionselement der Klasse EI 90 hält mindestens 90 Minuten einem Brand stand und limitiert während dieser Zeit die Temperatur auf der Kaltseite auf maximal 200°C. Im Stand der Technik werden Klassifikationen von EI20 und höher im Allgemeinen erreicht durch eine im Brandfall opake Schutzschicht.

Klassifizierungszeiten werden für jede Klassifikation in Minuten angegeben, wobei die Klassifizierungszeiten: 10, 15, 20, 30, 45, 60, 90, 120, 180, 240 oder 360 zu verwenden sind. Die Feuerwiderstandsdauer ist damit mit mindestens 10 Minuten definiert. Im Allgemeinen erfüllt ein Brandschutzelement somit mindestens 10 Minuten die entsprechenden Kriterien bzw. Anforderungen (siehe Klassifizierung - EN 13501) für die Feuerwiderstandsdauer. Das Minimalkriterium ist dabei der Raumabschluss. Ein Brandschutzelement muss daher mindestens als E10 klassifiziert werden können.

Brandschutzkonstruktionselement nach dem Stand der Technik, weisen üblicherweise eine Brandschutzzwischensicht auf, welche im Brandfall Energie absorbieren kann und auf diese Weise einen Hitzeschutz auf der dem Feuer abgewandte Seite (Kaltseite) des Brandschutzkonstruktionselements ausbildet.

WO 94/104355 zeigt ein Hitzeschutzelement welches aus Trägerelementen, zum Beispiel in der Form von Glasplatten besteht. In einem Zwischenraum zwischen jeweils zwei Glasplatten ist eine Brandschutzzwischenschicht aus einem ausgehärteten Polysilikat angeordnet, welche aus Alkalisilikat und mindestens einem Härter gebildet ist. Ebenfalls bekannt sind Brandschutzzwischenschichten aus Hydrogel.

Aufgrund der zusätzlichen Brandschutzmasse im Scheibenzwischenraum haben derartige Brandschutzverglasungen ein höheres Gewicht und sind aufwendig in der Fertigung und unter Umständen auch in der Entsorgung. Des Weitem kann je nach Art und Zusammensetzung der Brandschutzmasse die Gefahr bestehen, dass die Brandschutzmasse insbesondere unter extremen Umwelteinflüssen wie UV-Strahlung, grosser Hitze oder grosser Kälte altert und während des Alterungsprozesses eine ungewünschte Verfärbung zeigen kann.

Neben Brandschutzverglasungen gehören auch andere Verglasungen wie beispielsweise Isoliergläser oder Wärmeschutzgläser zum Stand der Technik. Solche Isoliergläser oder Wärmeschutzgläser sind oftmals als Mehrfachverglasungen ausgebildet und können in einem Scheibenzwischenraum eine so genannte low-E (low emision) Beschichtung aufweisen. Die low-E Beschichtung dient der Reflektion von Infrarotstrahlung und/oder Sonnenstrahlung wodurch der Wärmeverluste durch die Verglasung vom Gebäudeinneren minimiert werden kann.

US 2014/010976 zeigt eine thermische Isolationsverglasung, welche als Mehrfachverglasung ausgebildet ist. Die Mehrfachverglasung weist mindestens zwei Glassubstrate auf, wobei zwei low-E-Filme auf ein Glassubstrat aufgetragen werden. Die beiden low-E-Filme können verschieden aufgebaut sein und sind auf verschiedenen Seiten des Glassubstrats angeordnet.

Es sei hier festgehalten, dass die reine Reflexion von Wärmestrahlung (infraroter Strahlung) nicht einer Feuerresistenz gleichzusetzen ist. Auch beim Vorhandensein einer Wärmestrahlungsreflexionsschicht kann im Brandfall das Glas so heiss werden, dass es zerstört wird. Durch ein Zerbersten oder Zerfliessen der Verglasung kann sich das Feuer im Brandfall weiter ausbreiten und ein Brandschutz ist nicht mehr gewährleistet; auf diese Weise wird die Feuerwiderstandsdauer beendet bzw. begrenzt. Eine Brandschutzverglasung muss daher mindestes unter die oben erwähnte Klasse E (mit Feuerwiderstandszeiten von i.a. mindestens 20 Minuten) fallen, um als Brandschutzverglasung zu gelten. Das bedeutet, dass die Verglasung möglichst lang im Brandfall stehen bleiben muss und die Temperatur auf der dem Brandherd abgewandten Seite, der sogenannten Kaltseite, nicht mehr als 180 K ansteigt, um die Funktion einer Brandschutzverglasung gerecht zu werden.

Eine feuerbeständige Ofenscheibe wird beispielsweise in WO 93/07099 gezeigt. Das feuerbeständige Glas ist als monolithische beidseitig beschichtete Glasscheibe ausgestaltet, wobei während eines Ofentestes die Glastemperatur der Ofentemperatur entspricht und die Beschichtung während des Ofentestes intakt bleibt.

Es ist deshalb Aufgabe der Erfindung, eine Brandschutzverglasung zu schaffen, welche die Temperatur auf der Kaltseite im Brandfall limitiert und oben genannten Nachteile behebt.

Diese Aufgabe löst ein Brandschutzelement für den Hoch-, Fahrzeug- und/oder Schiffsbau mit den Merkmalen des Patentanspruches 1.

Das transparente Brandschutzelement für den Hoch-, Fahrzeug- und/oder Schiffsbau weist mindesten zwei im Wesentlichen parallele transparente oder transluzente Flächenelemente mit je einer ersten Flachseite und einer zweiten Flachseite, welche im Wesentlichen parallel zueinander verlaufen, auf. Die Flächenelemente können transparent sein. Ein erstes und ein zweites Flächenelemente vom einem Paar aus direkt benachbarten Flächenelementen sind von einander beabstandet und bilden so einen Zwischenraum. Mindestens das erste Flächenelement dieses Paars weist auf einer dem Zwischenraum abgewandten Flachseite eine infrarotreflektierende Beschichtung auf. Mindestens das erste und/oder das zweite Flächenelement weist/weisen mindestens eine vorgespannte Glasscheibe und/oder ein Keramikglas auf. Das Brandschutzelement weist unter Brandbedingungen gemäss EN 1363 (Stand Dezember 2013) und EN 1364 (Stand Dezember 2013) eine Feuerwiderstandsdauer von mindestens 15 Minuten auf (d.h. entspricht der Klasse EI15). Die Feuerwiderstandsdauer bzw. die Feuerwiderstandsprüfung von Bauteilen ist beispielsweise in EN 1363 bzw. EN 1364 (Stand Dezember 2013) geregelt. Das Brandschutzelement ist in der Klasse EI gemäss EN 13501 (Stand Dezember 2013) klassifizierbar.

Es hat sich überraschend gezeigt, dass ein solches Brandschutzelement mit einer infrarotreflektierende Beschichtung auf der vom Zwischenraum abgewandten Flachseite nicht nur eine raumabschliessende Funktion sondern zusätzlich noch eine hitzeisolierende Wirkung während mindestens 15 Minuten unter Brandbedingungen, bpsw. unter Bedingungen einer Einheits-Temperaturzeitkurve. Eine solche technische Anordnung kann im Gegensatz zum Stand der Technik mit infrarotreflektierende Beschichtung im Zwischenraum eine Reflektion der Wärmestrahlung des Brandes von der feuerabgewandeten Seite des Flächenelements begünstigen und eine Aufheizung des Zwischenraumes reduzieren.

Mit Hilfe des Brandschutzelements, insbesondere mit Hilfe der infrarotreflektierende Beschichtung, ist es möglich, dass die Wärmestrahlung im Brandfall direkt zum Brandraum hin zurückreflektiert werden kann. Auf diese Weise kann zunächst die Temperatur im Zwischenraum niedrig gehalten werden, wodurch auch die Temperatur auf der feuerabgewandten Seite (Kaltseite) des Brandschutzelements limitiert werden kann. Dadurch wird es möglich, dass das Brandschutzelement als Brandschutzkonstruktionselemente in die oben erwähnte Klasse EI15 klassifiziert werden und die Funktion eines Brandschutzelements mit raumabschliessender und isolierender Wirkung ausüben kann.

Die beiden im Wesentlichen parallelen grossen Flächen des Flächenelements werden auch Flachseiten genannt. Die Kanten der beiden Flachseiten sind über eine Stirnseite miteinander verbunden. Dabei weist die Stirnseite eine kleinere Fläche auf als die Flachseiten, und ihre Dimension entspricht der Dicke des Flächenelements. Mit 'Stirnseite' ist in diesem Text die umlaufende Oberfläche zwischen den Flachseiten, welche auch "Kante" oder "Schmalseite" eines Flächenelements bzw. eines Scheibenverbunds genannt wird, bzw. ein Fläche davon, gemeint. Ein Randbereich des Flächenelements, der in einem Rahmen angeordnet sein kann, kann auch als Randeinstand bezeichnet werden

Das erste oder zweite Flächenelement kann aus einem Glas mit feuerwiderstandsfähigen Eigenschaften bestehen. Dabei muss das Flächenelement nicht ausschliesslich aus Glasmaterial bestehen, es kann beispielsweise auch einen Kunststoff (d.h. insbesondere ein Polymer, allenfalls mit bspw. anorganischen Füllern) aufweisen, z.B. Acrylglas als Teil eines Verbundglases aufweisen. Das Brandschutzelement kann auch als Brandschutzverglasung bezeichnet werden.

In dem Paar von benachbarten Flächenelementen sind das erste und das zweite Flächenelement direkt benachbart, dass heisst, dass kein weiteres Element, wie beispielsweise ein weiteres Flächenelement, zwischen den direkt benachbarten Flächenelementen angeordnet ist. Direkt benachbarte Flächenelemente sind dabei die zueinander flachseitig nächstgelegenen Flächenelemente. Das Paar von direkt benachbarten Flächenelementen bildet den Zwischenraum, welcher flachseitig durch die beiden direkt benachbarten Flächenelemente gebildet wird. Die Flachseite eines Flächenelements die dem Zwischenraum zugewandt ist, wird auch als zwischenraumseitige Flachseite bezeichnet.

Die infrarotreflektierende Beschichtung reflektiert elektromagnetische Strahlung in einem Wellenlängenbereich von etwa 780 nm bis 1000 Mikrometer. Die Effektivität der Reflektion bzw. der Abgabe der Strahlung wird auch als Emissivität oder Emissionsgrad bezeichnet. Der Emissionsgrad wird definiert als Verhältnis der emittierten Energie von einer bestimmten Oberfläche zu der eines idealen Strahlers (ein schwarzer Körper mit einem Emissionsgrad = 1,0). Ein Verfahren zur Bestimmung des Emissionsgrades von Glas und beschichtetem Glas wird in der Norm EN 12898 (Stand 2001) festgelegt.

Der Emissionsgrad wird gemäss EN 12898 im Bereicht von 5 bis 50 Mikrometern bestimmt. Ein Natron-Kalk-Glas hat beispielsweise eine Emissivität bzw. einen Emissionsgrad von etwa 0.8-0.9.

Da die infrarotreflektierende Beschichtung auf der dem Zwischenraum abgewandten Seite angeordnet ist, kann mit Brandfall ein Grossteil der Wärmestrahlung zum Brandherd zurück reflektiert werden. Auf diese Weise wird es möglich die Temperatur im Zwischenraum möglichst tief zu halten, da die Wärmestrahlung vor dem Eintreten in den Zwischenraum reflektiert wird. Dadurch wird des möglich, dass ein zweites Flächenelement, welches vom Brandherd angewandt ist, vor der Wärmestrahlung des Feuers abzuschirmen, wodurch auch die Temperatur auf der feuerabgewandten Seite (Kaltseite) des Brandschutzelements limitiert werden kann.

Durch die Verwendung von Glas- und/oder Kunstglasscheiben kann die Transparenz und Stabilität des Brandschutzelements gefördert und unterstützt werden.

Die Vorspannung in einer Glasscheibe kann beispielsweise thermisch oder chemisch induziert werden. Durch das Vorspannen des Flächenelements kann eine Druckspannung an der Oberfläche des Flächenelements und eine Zugspannung im inneren Volumen des Flächenelements aufgebaut werden. Auf diese Weise wird es möglich, ein Wachstum von Rissen im Flächenelement zu erschweren, wodurch ein Stehenbleiben der Flächenelemente unterstützt werden kann. Das Stehenbleiben des Flächenelements ist für die raumabdichtende Wirkung des Brandschutzelements und damit für die Feuerwiderstandsdauer wesentlich, da ein Zerspringen oder Zerplatzen des Brandschutzelements die Feuerwiderstandsdauer beendet.

Es hat sich gezeigt, dass nicht ausreichende Vorspannungen im Glas beim Vorspannen beziehungsweise Härten zusammen mit Mikroverletzungen an der Glaskante einer der Gründe sind, die zu einem Spontanbruch bei Brandbelastungen führen können. Eine erhöhte Vorspannung (die zu einer erhöhten Druckspannung im Flächenelement führt) kann den Auswirkungen von Temperaturunterschieden im Brandfall besser entgegenwirken und somit auftretende Zugspannungen bzw. Rand-Druckspannungen ausgleichen. Das Flächenelement sollte bevorzugt eine Mindest-Oberflächenspannung und eine positive Mindest-Rand-Druckspannung besitzen.

Die Beständigkeit des Brandschutzelements ist unter anderem von einer Temperaturdifferenz zwischen einer Scheibenmitte und einem Randbereich der Brandschutzscheibe abhängig. Der Randbereich kann beispielsweise in einen Rahmen eingefasst sein und ist so im Brandfall gegenüber der Wärmequelle abgedeckt. Daher ist der Randbereich im Brandfall kühler als die Scheibenmitte, die dem Feuer direkt ausgesetzt ist. Die maximale Temperaturdifferenz, die die Brandschutzglasscheibe aushält bevor es zu einem Versagen kommt, ist proportional zu einer Spannung, die durch das Vorspannen im Flächenelement erzeugt werden kann.

Während der Feuerwiderstandszeit bleibt mindestens ein Flächenelement des Brandschutzelements stehen. Dadurch wird unter anderem die raumabschliessende Wirkung des Brandschutzelements sichergestellt, die wichtig für die Brandschutzeigenschaften des Brandschutzelements ist.

In Ausführungsbeispielen kann die Vorspannung der Flächenelemente mindestens 200 MPa betragen. Aufgrund dieser hohen Druckspannung im Oberflächenbereich des Flächenelements kann die Rissbildung und damit der Funktionsverlust des Flächenelements herausgezögert werden. Auf diese Weise kann die Feuerwiderstandsdauer des Brandschutzelements verlängert werden.

In Ausführungsbeispielen kann mindestens ein Flächenelement geschliffene und/oder polierte Kanten aufweisen. Durch das Schleifen und Polieren eines Flächenelements kann die Kantenfestigkeit des Flächenelements im Vergleich zu unbehandelten beziehungsweise unbearbeiteten Glasscheiben gesteigert werden. Die Steigerung der Kantenfestigkeit ist besonders stark ausgeprägt, falls das Flächenelement nach dem zusätzlichen Schritt des Schleifen und Polierens (Bearbeiten der Kanten) eine hohe thermische Vorspannung aufweist. Insbesondere die Kante eines Flächenelements kann bei wechselnder thermischer Belastung (beispielsweise durch Sonneneinstrahlung bei Fensterscheiben) sowie im Brandfall bei hoher thermischer Belastung Ausgangspunkt für einen Bruch des Flächenelements sein. Die wechselnde thermische Belastung entsteht beispielsweise durch ein Einfassen des Flächenelements in den Rahmen, wobei das Einfassen mit einer bestimmten Einbautiefe des Flächenelements im Rahmen realisiert wird. Dadurch wird die Kante des Flächenelements durch den Rahmen abgedeckt und kann eine niedrigere Temperatur aufweisen, als ein nicht abgedeckter Bereich des Flächenelements. Eine so entstehende Temperaturdifferenz kann insbesondere die Kanten und das Flächenelement in der Nähe der Kanten stark belasten. Bei grösseren Temperaturschwankungen besteht die Gefahr, dass eine Rissbildung von Mikrorissen im Randbereich ausgeht. Daher ist es vorteilhaft, wenn durch das Schleifen und Polieren der Kanten des Flächenelements die Kantenfestigkeit im Vergleich zu unbehandelten Glasscheiben erhöht ist. Es ist auch möglich, dass alle oder nur ein Teil der Flächenelemente geschliffene und/oder polierte Kanten aufweisen/aufweist. Der Zwischenraum kann wie an sich von Isoliergläsern bekannt mit einem Edelgas gefüllt sein. Edelgase reduzieren die Wärmeleitung im Vergleich zu anderen Füllungen des Zwischenraums auch im Brandfall. Des Weiteren kann durch die Edelgasfüllung des Zwischenraums im Brandfall die Entstehung von toxischen Reaktionsprodukten verringert werden, da Edelgase reaktionsträge sind. Sie können daher auch als Löschmittel für Zersetzungsprodukte im Zwischenraum betrachtet werden.

Der Zwischenraum kann als abgeschlossener Raum ausgebildet sein, wodurch eine aktive Kühlung ausgeschlossen wird und eine Ableitung von Wärmeenergie verhindert wird.

Der Zwischenraum des Brandschutzelements kann frei von einem energieabsorbierenden Mittel sein. Das bedeutet, dass der Zwischenraum frei von einer energieabsorbierenden, im Brandfall auftrübenden oder aufschäumenden Brandschutzzwischenschicht ist. Auf diese Weise können beispielsweise unerwünschtes Aufschäumen, Einfrieren und/oder Verfärben einer energieabsorbierenden Brandschutzzwischenschicht verhindert werden. Solche Brandschutzzwischenschichten können auf Alkalisilikaten basieren oder aus Hydrogelen. Zwischenschichten in Brandschutz-Isoliergläser könnten beispielsweise Silikonen, Epoxy-Harzen, Polyvinylbutyral (PVB), Ethylenvinylacetat (EVA), Thermoplastischen Elastomeren auf Polyurethanbasis (TPU) oder Fluorkohlenwasserstoffen (THV) etc. als verbinde Folien aufweisen.

Eine solche energieabsorbierenden Brandschutzzwischenschicht, beispielsweise in Form einer Zwischenschicht, ist nicht zu verwechseln mit einer Beschichtung, wie der infrarotreflektierenden Beschichtung. Die Dicke einer Beschichtung beschränkt sich auf einige Mikrometer bis Millimeter (meist ist die Dicke der Beschichtung kleiner als 500 Mikrometer), energieabsorbierende Brandschutzzwischenschicht weisen im Gegensatz dazu in der Regel eine Dicke von mindestens 1 bis 5 mm auf. Des Weiteren kann die Zwischenschicht eine stabilisierende Wirkung auf das Flächenelement ausüben, beispielsweise in Verbundgläsern. Im Brandfall kühlen, isolieren oder schäumen aktive Zwischenschichten auf. Die Zwischenschichten weisen beispielsweise ein Polysilikat oder ein Hydrogel aus. Im Gegenzug dazu weisen die Beschichtungen meist ein Metal oder Metalloxid und reflektieren Strahlung im infraroten Spektralbereich.

Ein energieabsorbierendes Mittel kann auch als Luftstrom ausgebildet sein. Auf diese Weise würde der Zwischenraum aktive mit Luft gekühlt werden, dass heisst die Wärmeenergie würde im Brandfall aus dem Zwischenraum abtransportiert werden. Solche Konstruktionen mit einer Luftkühlung, sind technisch aufwendig und daher fehleranfälliger. Des Weiteren ist der Anwendungsbereich für Brandschutzkonstruktionen mit einer Lüftkühlung meist auf niedrigere Temperaturbereiche beschränkt. Solche niedrigeren Temperaturbereiche sind beispielsweise in Öfen für Küchen (Backofentüren) zu finden, da die Temperatur im Innenbereich des Ofens meist auf 250°C limitiert ist.

In Ausführungsbeispielen kann mindestens das zweite Flächenelement des Paars aus direkt benachbarten Flächenelementen auf einer dem Zwischenraum zugewandten Flachseite eine weitere infrarotreflektierende Beschichtung aufweisen. Auf diese Weise wird es möglich, dass die Feuerwiderstandsdauer weiter gesteigert werden kann. Die weitere Steigerung/Verlängerung der Feuerwiderstandsdauer ist darauf zurück zu führen, dass Wärmestrahlung, welche nicht vom ersten Flächenelement in den Brandraum zurück reflektiert wurde, nun im Zwischenraum vom zweiten Flächenelement reflektiert werden kann. Dadurch wird es möglich, dass die Temperatur auf der feuerabgewandten Seite des Brandschutzelements nicht ansteigt. Dadurch kann die Feuerwiderstandsdauer des Brandschutzelements verlängert werden.

In Ausführungsbeispielen kann die Feuerwiderstandszeit des Brandschutzelements mindestens 20 Minuten bzw. 30 Minuten betragen. Dadurch kann das Brandschutzelement in die Klasse EI20 bzw. EI30 eingeordnet werden und entspricht der entsprechenden Europäischen Norm (EN) und kann vorschriftsmässig im Hoch-, Fahrzeug- und/oder Schiffsbau eingesetzt werden. In weiteren Ausführungsbeispielen kann die Feuerwiderstandszeit des Brandschutzelements mindestens 60 Minuten bzw. 90 Minuten betragen. Dadurch kann das Brandschutzelement in die Klasse EI60 bzw. EI90 eingeordnet werden.

In weiteren Ausführungsbeispielen kann das Brandschutzelement mindestens drei Flächenelemente aufweisen wobei jeweils zwischen den voneinander beabstandeten und direkt benachbarten Flächenelementen je ein Zwischenraum gebildet wird. Jedes Flächenelement weist mindestens auf einer Flachseite eine infrarotreflektierende Beschichtung auf und maximal eine Flachseite jedes Zwischenraums weist eine infrarotreflektierende Beschichtung auf. Auf diese Weise können alle infrarotreflektierende Beschichtungen so angeordnet sein, dass sie auf der dem Feuer zugewandten Seite des Flächenelements angeordnet sind. Dadurch wird es möglich, dass ein Grossteil der Wärmestrahlung des Feuers in den Brandraum zurück reflektiert werden kann und so die Temperatur auf der feuerabgewandte Seite des Brandschutzelements möglichst lange nicht mehr als 180 K gegenüber der Raumtemperatur erhöht.

In weiteren Ausführungsformen weist beispielsweise mindestens eine Flachseite jedes Zwischenraums eine infrarotreflektierende Beschichtung auf. Auf diese Weise wird es möglich, dass von jedem Zwischenraum aus die Wärmestrahlung wieder zurück in den Brandraum reflektiert werden kann. Dadurch kann die Temperatur auf der feuerabgewandte Seite des Brandschutzelements limitiert werden. In anderen Ausführungsbeispielen weist maximal eine Flachseite eines Zwischenraums eine infrarotreflektierende Beschichtung auf.

In Ausführungsbeispielen kann mindestens das erste Flächenelement als ein äusserstes Flächenelement des Brandschutzelements angeordnet sein oder das erste Flächenelement kann als Teil einer Struktureinheit auf einer Aussenseite des Brandschutzelements angeordnet sein. Die Struktureinheit umfasst einen zwischenraumfreien Verbund von Flächenelementen.

Eine Aussenseite des Brandschutzelements ist eine Flachseite die nur an einen Zwischenraum angrenzt und nicht von zwei Zwischenräumen umgeben ist. Mit anderen Worten nur eine Flachseite des Flächenelements oder des Strukturverbunds ist zu einem Zwischenraum hin angeordnet.

Die Struktureinheit, welche einen zwischenraumfreien Verbund von Flächenelementen umfasst, kann eine infrarotreflektierende Beschichtung beispielsweise im Inneren des Verbunds oder auf einer Flachseite des Verbunds aufweisen. Der Verbund kann eine folienartige Zwischenschicht aufweisen, welche die Flächenelemente miteinander verbindet. Es ist möglich, dass die infrarotreflektierende Beschichtung mit der Zwischenschicht in Berührung kommt, wobei die infrarotreflektierende Wirkung der Beschichtung nicht beeinträchtig wird.

Durch die nach aussen angeordnete infrarotreflektierende Beschichtung kann die Wärmestrahlung direkt in den Brandraum reflektiert werden, ohne dass der Zwischenraum und damit indirekt die feuerabgewandte Seite des Brandschutzelements erwärmt wird. Die Feuerwiderstandsdauer kann dadurch erhöht werden.

In Ausführungsbeispielen mit einer infrarotreflektierende Beschichtung auf einer Aussenseite des Brandschutzelements kann die Beschichtung beispielsweise den Anforderungen der Norm DIN 4102 (Stand Dezember 2013) für die Klasse A genügen. Diese Beschichtungen sind nicht brennbar und tropfen oder fallen im Brandfall nicht ab. Des Weiteren entwickeln diese Beschichtungen keinen Rauch, sie können jedoch Anteile von brennbaren Baustoffen aufweisen.

In Ausführungsbeispielen kann mindestens eine Flachseite mindestens eines Flächenelements frei von einer infrarotreflektierenden Beschichtung sein oder eine Beschichtung aufweisen, die vom Fachmann nicht als infrarotreflektierend betrachtet wird, dass heisst eine Emissivität (Emissionsgrad) von mindestens 0.5, insbesondere mindestens 0.6 aufweisen. Auf diese Weise können Resonanzen und wechselseitiges reflektieren von Wärmestrahlung verringert bzw. verhindert werden.

In Ausführungsbeispielen kann mindestens das erste oder das zweite Flächenelement von einem Paar aus direkt benachbarten Flächenelementen als Teil einer Struktureinheit ausgebildet sein. Die Struktureinheit kann, wie bereits erwähnt, einen zwischenraumfreien Verbund von Flächenelementen umfassen. Auf diese Weise kann das Brandschutzelement auch die stabilisierenden Eigenschaften eines Verbunds von Flächenelementen aufweisen und kann daher sehr vielseitig im Hoch-, Fahrzeug- und/oder Schiffsbau eingesetzt werden.

In Ausführungsbeispielen kann die infrarotreflektierende Beschichtung eine Emissivität (Emissionsgrad) von maximal 0.3, insbesondere maximal 0.2, insbesondere maximal 0.1 aufweisen. Der Emissionsgrad eines Körpers gibt an, wie viel Strahlung er im Vergleich zu einem idealen Wärmestrahler, einem schwarzen Körper, abgibt. Mit anderen Worten reflektiert die infrarotreflektierende Beschichtung mindestens 70%, insbesondere 75% bis 90% der Strahlung in einem Wellenlängenbereich von 5 bis 50 Mikrometern. Dadurch wird es möglich, dass ein Grossteil des Wärmestrahlung auf in den Brandraum zurück reflektiert werden kann und die die Temperatur auf der feuerabgewandet Seite des Brandschutzelements limitiert werden kann.

In weiteren Ausführungsbeispielen kann der Emissionsgrad des beschichteten Flächenelements maximal 0.5 bzw. maximal 0.4 betragen. Auf diese Weise kann eine effektive Reflexion von infraroter Strahlung erreicht werden.

Die infrarotreflektierende Beschichtung kann beispielsweise in einem Wellenlängenbereich um 3000 nm (entspricht etwa 800°C) eine sehr ausgeprägte Reflektion aufweisen, wodurch die Hitzeentwicklung im Brandfall auf der feuerabgewandet Seite des Brandschutzelements effektive reduziert werden kann.

In Ausführungsbeispielen des Brandschutzelements mit mehreren Flächenelementen mit mindestens einer infrarotreflektierenden Beschichtung kann die am effektivsten infrarotreflektierende Beschichtung am nächsten zum Brandraum hin angeordnet. Auf diese Weise wird ein Grossteil der Wärmestrahlung instantan zum Brandraum reflektiert, wodurch der Zwischenraum zum direkt benachbarten Flächenelement nur geringfügig aufgeheizt werden kann. Daher kann die Temperatur auf der feuerabgewandet Seite (Kaltseite) des Brandschutzelements limitiert werden.

In weiteren Ausführungsbeispielen kann das Brandschutzelement, insbesondere die infrarotreflektierende Beschichtung, in einem sichtbaren Bereich des elektromagnetischen Spektrums transparent sein. Die Beschichtung weist daher im sichtbaren Bereicht (400-800 nm) eine Transmission von mindestens 30%, insbesondere mindestens 50 %, insbesondere mindestens 60 % der Lichtintensität auf. Die Transmission kann durch Absorption und/oder Streuung und/oder Brechung der elektromagnetischen Strahlung herabgesetzt werden. Durch die im sichtbaren Bereich transparente Beschichtung wird es möglich das Brandschutzelement als Brandschutzglas zu verwenden.

In Ausführungsbeispielen kann die infrarotreflektierende Beschichtung eine einschichtige oder mehrschichtige Metall- und/oder Metalloxid-Beschichtung aufweisen. Die infrarotreflektierende Beschichtung kann eine Metall-Metalloxid Beschichtung sein.

Die infrarotreflektierende Beschichtung kann auch ein Hardcoating sein. Ein solches Hardcoating kann auf eine Zinnoxid-Fluor-Basis (SnO2:F) aufgebaut sein. Die infrarotreflektierende Beschichtung kann auch eine ITO (Indium-Zinn-Oxid = "Indium tin oxide" oder "tin-doped indium oxide") Beschichtung aufweisen.

Die infrarotreflektierende Beschichtung kann eine Silberschicht aufweisen, wobei die Silberschicht als einfach, doppel oder dreifach Schicht ausgebildet sein kann.

In Ausführungsbeispielen kann die infrarotreflektierende Beschichtung so beschaffen sein, dass die Beschichtung auf die Bedingungen des thermischen und/oder chemischen Vorspannens abgestimmt ist. Auf diese Weise kann das Flächenelement zusammen mit der Beschichtung vorgespannt werden. Dadurch kann die Herstellung des Brandschutzelements vereinfacht werden. Solche Beschichtungen werden auch vorspannbare Beschichtungen genannt.

Die infrarotreflektierende Beschichtung kann einer Brandbelastung standhalten und im Brandfall oxidativ unveränderbar sein. Dadurch wird es möglich, dass die infrarotreflektierende Wirkung der Beschichtung auch während eines Brandes aufrecht erhalten werden kann und die Beschichtung nicht zerstört wird. Auf diese Weise kann die Kaltseite des Brandschutzelements vor einem Aufheizen geschützt werden.

Das Brandschutzelement kann als Kastenfenster oder Isolierglas ausgebildet sein. Dadurch kann das Brandschutzelement vielseitig im Hoch-, Fahrzeug- und/oder Schiffsbau eingesetzt werden.

In weiteren Ausführungsbeispielen kann das Flächenelement einen dilatometrischen Erweichungspunkt von mindestens 620°C aufweisen. Dadurch ist es möglich, dass das thermische Vorspannen bei höheren Temperaturen erfolgen kann, wodurch die Vorspannung stärker ausgeprägt werden kann. Auf diese Weise kann die Rissbildung und damit die Zerstörung des Flächenelements verzögert werden.

Die dilatometrische Erweichungstemperatur entspricht der Temperatur bei der ein Probekörper oberhalb eines Transformationsgebiets aufhört sich auszudehnen.

In Ausführungsbeispielen kann der Randeinstand des mindestens ersten oder zweiten Flächenelementes im Rahmen des Brandschutzelements mindestens 1% der Grösse des Flächenelements betragen. Der Randeinstand kann dabei mindestens 15 mm, insbesondere mindestens 25 mm betragen. Auf diese Weise kann das mindestens erste oder zweite Flächenelement sicher im Rahmen fixiert werden ohne ein Zerplatzen oder Zerfliessen des Flächenelements im Brandfall zu riskieren. Dadurch wird es möglich die Feuerwiderstandsdauer über 15 Minuten zu halten.

In weiteren Ausführungsbeispielen ist ein Randverbund so ausgebildet, dass er wenig Randlast trägt und/oder einen hohen Flammpunkt bzw. Zündpunkt aufweist. Auf diese Weise kann das Brandschutzelement einem Brand mindestens 15 Minuten standhalten.

Es sei hier noch einmal darauf hin gewiesen, dass ein Brandschutzglas für den Hoch-, Fahrzeug- und/oder Schiffsbau anderen Bestimmungen unterliegt wie beispielsweise eine Ofentür. Es ist auch entscheidend festzustellen, dass in einem Ofen meist tiefere Temperaturen herrschen als bei dem einem Gebäude-, Fahrzeug- oder Schiffsbrand, daher sind beispielsweise Ofentüren nicht einfach als Brandschutzelemente im Sinne einer Brandschutzverglasung einzusetzen.

In Ausführungsbeispielen ist das Brandschutzelement als asymmetrische Vorrichtung ausgebildet. Das bedeutet, dass die Einbaurichtung für das Brandschutzelement in ein Gebäude, Fahrzeug oder Schiff durch die Gegebenheiten vor Ort vorgegeben und gegebenenfalls am Brandschutzelement markiert.

In anderen Ausführungsbeispielen ist das Brandschutzelement als symmetrische Vorrichtung ausgebildet, dabei können zwei asymmetrische Brandschutzelemente spiegelsymmetrisch zueinander angeordnet werden. Die beiden Brandschutzelemente müssen dabei nicht zwingend identisch sein. Das bedeutet, dass ein solches symmetrische Brandschutzelement mindestens vier beschichtete Flächenelemente aufweist.

Weitere bevorzugte Ausführungsformen gehen aus den abhängigen Patentansprüchen hervor.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: Brandschutzelement mit zwei Flächenelementen;
- Figur 2: Brandschutzelement mit einem Verbundglas;
- Figur 3: Brandschutzelement mit drei Flächenelementen; und
- Figur 4: symmetrisches Brandschutzelement mit vier Flächenelementen.

Grundsätzlich sind in den Figuren gleiche oder analoge Teile mit gleichen Bezugszeichen versehen.

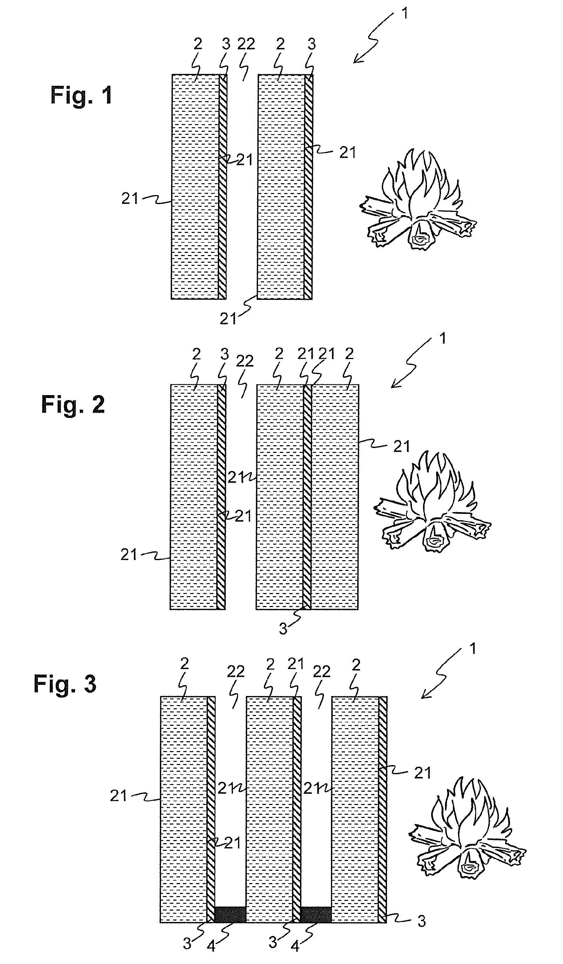

Figur 1 zeigt eine Brandschutzelement 1 mit zwei Flächenelementen 2. Die Flächenelemente 2 sind voneinander beanstandet und der Zwischenraum 22 zwischen den beiden Flächenelementen 2 ist frei von einem energieabsorbierenden Mittel. Ein erstes Flächenelement 2 weist eine Beschichtung 3 auf der dem Zwischenraum 22 abgewandten Seite auf. Die infrarotreflektierende Beschichtung 3 auf dem ersten Flächenelement 2 ist auf der feuerzugewandten Seite des Brandschutzelements 1 angeordnet. Im Brandfall kann so die Wärmestrahlung zum Brandherd zurück reflektiert werden und die Temperatur im Zwischenraum 22 erhöht sich nicht so stark.

Die beiden Flächenelemente 2 sind zwei thermisch vorgespannte Glasscheiben, die eine Vorspannung von mindestens 200 MPa aufweisen. Durch diese hohe Vorspannung können die Glasscheiben einem Brand mindestens 15 Minuten standhalten ohne zu zerspringen oder zu zerfliessen. Die Kanten der Glasscheiben sind geschliffen und poliert um die Kantenfestigkeit der Glasscheiben im Vergleich zu unbehandelten beziehungsweise unbearbeiteten Glasscheiben zu steigern.

Der Zwischenraum 22 ist frei von einem energieabsorbierenden Mittel, jedoch ist die Aufheizung des Zwischenraums 22 durch die infrarotreflektierende Beschichtung 3 auf der ersten Glasscheibe 2 reduziert. Die Wärmestrahlung im Zwischenraum wird mit Hilfe einer weiteren infrarotreflektierenden Beschichtung 3 auf der dem Zwischenraum 22 zugewanden Seite der zweiten Glasscheibe 2 in die Richtung des Brandherdes reflektiert. Dadurch bleibt die dem Zwischenraum 22 abgewandte Seite der zweiten Glasscheibe 2 verhältnismässig kühl und das Brandschutzelement 1 kann in der Klasse EI klassifiziert werden und somit als Brandschutzverglasung eingeordnet werden.

Figur 2 zeigt eine Brandschutzelement 1 mit einem Verbundglas und einem Keramikglas als Flächenelemente 2. Das Verbundglas ist eine Struktureinheit, das als zwischenraumfreien Verbund zwei Flächenelemente 2 umfasst. Das Verbundglas weist zwei thermisch vorgespannte Glasscheiben auf, wobei die beiden Glasscheiben über eine Polyvinylbutyral (PVB)-Folie miteinander verbunden sind. Mindestens eine der beiden Glasscheiben weist eine infrarotreflektierende Beschichtung 3 auf, die in den Scheibenverbund eingebunden ist und somit in Kontakt mit der PVB-Folie kommt. Die PVB-Folie beeinträchtigt die infrarotreflektierende Wirkung der Beschichtung 3 nicht. Das Verbundglas erhöht die Standzeit des Brandschutzelements 1 und kann somit die Feuerwiderstandszeit der Brandschutzverglasung im Vergleich zu der in Figur 1 gezeigten Ausführungsform erhöhen.

Das zweite Flächenelement 2 ist ein Keramikglas, welches einen geringen Wärmeausdehnungskoeffizienten besitzt. Durch den geringen Wärmeausdehnungskoeffizienten kann das Keramikglas thermischen Belastungen, beispielsweise im Brandfall lange standhalten ohne zu zerspringen oder zu zerfliessen. Mit Hilfe der zum Brandherd hin ausgerichteten infrarotreflektierenden Beschichtungen 3 wird die Wärmestrahlung in den Brandraum zurückreflektiert und die Temperatur auf der feuerabgewandte Seite (Kaltseite) des Brandschutzelements 1 kann für mindestens 15 Minuten unter 200°C gehalten werden.

Figur 3 zeigt ein Brandschutzelement 1 mit drei Flächenelementen 2. Alle drei Flächenelemente 2 sind als thermisch vorgespannte Glasscheiben ausgebildet, wobei die Vorspannung mindestens 200 MPa beträgt.

Jedes Flächenelement 2 weist auf einer Flachseite 21 eine vorspannbare infrarotreflektierende Beschichtung 3 auf. Die vorspannbare infrarotreflektierende Beschichtung 3 wird vor dem thermischen Vorspannen auf die Flachseite 21 des Flächenelements 2 aufgetragen und mit dem Flächenelement 2 erhitzt und vorgespannt.

Die Glasscheiben sind paarweise mit einem Abstandshalter 4 voneinander beabstandet. Ein Paar aus direkt benachbarten Flächenelementen 2 bildet einen Zwischenraum 22, daher weist das Brandschutzelement 1 mit drei Glasscheiben zwei Zwischenräume 22 auf.

Die vorgespannten und einseitig beschichteten Glasscheiben sind so zueinander angeordnet, dass jeweils nur eine infrarotreflektierende Beschichtung 3 dem Zwischenraum 22 zugewandt ist. Auf diese Weise sind die infrarotreflektierenden Beschichtungen 3 in die gleiche Richtung ausgerichtet, wobei die infrarotreflektierenden Beschichtungen 3 auf der dem Feuer zugewandten Seite der Glasscheibe angeordnet sind. Die Wärmestrahlung des Feuers wird durch die infrarotreflektierenden Beschichtungen 3 in den Brandraum zurückreflektiert, wobei die dem Feuer abgewandte Seite des Brandschutzelements 1 vor einer Aufheizung geschützt bleibt.

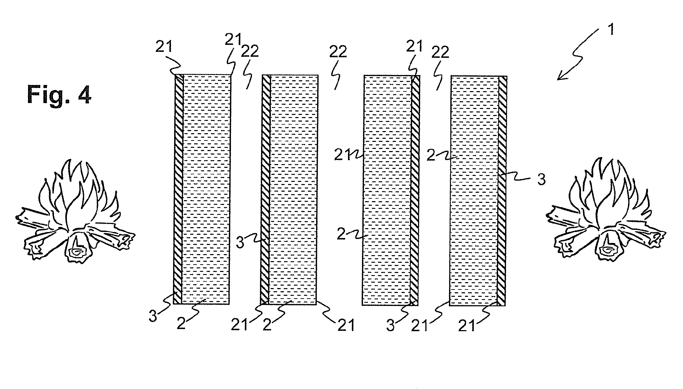

Figur 4 zeigt eine Brandschutzverglasung 1 bestehend aus vier vorgespannten Glasscheiben 2, wobei diese in zwei Untereinheiten aus je zwei direkt benachbarten Glasscheiben unterteilt werden kann. Jede Untereinheit besteht aus einem wie in Figur 1 gezeigten Brandschutzelement 1 mit zwei Flächenelementen 2. Die infrarotreflektierenden Beschichtungen 3 der Glasscheiben der Untereinheit sind in dem Paar aus direkt benachbarten Glasscheiben so angeordnet, dass sie zur Aussenseite des Brandschutzelements 1 hin angeordnet sind. Auf diese Weise wird eine symmetrische Brandschutzverglasung bereitgestellt, die unanhängig von der Einbaurichtung die Temperatur auf der Kaltseite des Brandschutzelements 1 limitiert.

## Patentansprüche

1. Brandschutzelement (1) für den Hoch-, Fahrzeug- und/oder Schiffsbau aufweisend
- mindestens zwei transparente im Wesentlichen parallele Flächenelemente (2) mit je einer ersten Flachseite (21) und einer zweiten Flachseite (21), welche im Wesentlichen parallel zueinander verlaufen,
- wobei ein erstes und ein zweites Flächenelement (2) von einem Paar aus direkt benachbarten Flächenelementen (2) von einander beabstandet sind und so einen Zwischenraum (22) bilden;
- mindestens das erste Flächenelement (2) auf einer dem Zwischenraum (22) abgewandten Flachseite (21) eine infrarotreflektierende Beschichtung (3) aufweist;
- wobei mindestens das erste oder das zweite Flächenelement (2) mindestens ein Keramikglas oder eine vorgespannte Glasscheibe aufweist; und
- wobei das Brandschutzelement (1) unter Brandbedingungen gemäss EN 1363 und EN 1364 (Stand Dezember 2013) eine Feuerwiderstandsdauer von mindestens 15 Minuten (EI15) aufweist und
- wobei das Brandschutzelement (1) in der Klasse EI gemäss EN 13501 (Stand Dezember (2013)) klassifizierbar ist.

2. Brandschutzelement (1) gemäss Anspruch 1, wobei die Vorspannung in mindestens einer vorgespannten Glasscheibe 200 MPa beträgt.

3. Brandschutzelement (1) gemäss einem der Ansprüche 1-2, wobei mindestens ein Flächenelement (2) geschliffene und/oder polierte Kanten aufweist.

4. Brandschutzelement (1) gemäss einem der Ansprüche 1-3, wobei der Zwischenraum (22) frei von einer energieabsorbierenden, im Brandfall eintrübenden oder aufschäumenden Brandschutzzwischenschicht ist.

5. Brandschutzelement (1) gemäss einem der Ansprüche 1-4, wobei mindestens das zweite Flächenelement (2) des Paars aus direkt benachbarten Flächenelementen (2) auf einer dem Zwischenraum (22) zugewandten Flachseite (22) eine infrarotreflektierende Beschichtung (3) aufweist.

6. Brandschutzelement (1) gemäss einem der Ansprüche 1-5, wobei die Feuerwiderstandsdauer des Brandschutzelements (1) mindestens 20 Minuten, insbesondere mindestens 30 Minuten beträgt.

7. Brandschutzelement (1) gemäss einem der Ansprüche 1-6, wobei das Brandschutzelement (1) mindestens drei Flächenelemente (2) aufweist und jeweils zwischen einem Paar von direkt benachbarten und voneinander beabstandeten Flächenelemente (2) je ein Zwischenraum (22) gebildet wird,
- wobei jedes Flächenelement (2) mindestens auf einer Flachseite (21) eine infrarotreflektierende Beschichtung (3) aufweist und
- maximal eine Flachseite (21) jedes Zwischenraums (22) eine infrarotreflektierende Beschichtung (3) aufweist.

8. Brandschutzelement (1) gemäss einem der Ansprüche 1-7, wobei mindestens eine Flachseite (21) jedes Zwischenraums (22) eine infrarotreflektierende Beschichtung (3) aufweist.

9. Brandschutzelement (1) gemäss einem der Ansprüche 1-8, wobei mindestens ein erstes Flächenelement (2) als ein äusserstes Flächenelement (2) des Brandschutzelements (1) oder das erste Flächenelement (2) als Teil einer Struktureinheit auf einer Aussenseite des Brandschutzelements (1) angeordnet ist, wobei die Struktureinheit einen zwischenraumfreien Verbund von Flächenelementen (2) umfasst.

10. Brandschutzelement gemäss einem der Ansprüche 1-9, wobei mindestens eine Flachseite (21) mindestens eines Flächenelements (2) frei von einer infrarotreflektierende Beschichtung (3) ist oder einer Beschichtung mit einer Emissivität (Emissionsgrad) von mindestens 0.5, insbesondere mindestens 0.6 aufweist.

11. Brandschutzelement (1) gemäss einem der Ansprüche 1-10, wobei mindestens das erste oder das zweite Flächenelement (2) als Teil einer Struktureinheit ausbildet ist, wobei die Struktureinheit einen zwischenraumfreien Verbund von Flächenelementen (2) umfasst.

12. Brandschutzelement (1) gemäss einem der Ansprüche 1-11, wobei die infrarotreflektierende Beschichtung (3) eine Emissivität (Emissionsgrad) von maximal 0.3, insbesondere maximal 0.2, insbesondere maximal 0.1 aufweist.

13. Brandschutzelement (1) gemäss einem der Ansprüche 1-12, wobei die infrarotreflektierende Beschichtung (3) eine einschichtige oder mehrschichtige Metall- und/oder Metalloxid-Beschichtung aufweist.

14. Brandschutzelement (1) gemäss einem der Ansprüche 1-13, wobei das Flächenelement (2) einen Erweichungspunkt von mindestens 620°C (dilatometriche Messung) aufweist.
